# EUROPEAN PATENT SPECIFICATION

(11) **EP 1 726 145 B1**
(45) Date of publication and mention of the grant of the patent: **15.08.2007**
(21) Application number: 04721155.2
(22) Date of filing: 17.03.2004
(51) Int. Cl.: H04L 29/08, H04L 29/06

(54) **METHOD AND APPARATUS FOR EFFICIENTLY TRANSFERRING DATA WITHIN A TELECOMMUNICATIONS NETWORK**
VERFAHREN UND VORRICHTUNG ZUM EFFIZIENTEN TRANSFERIEREN VON DATEN IN EINEM TELEKOMMUNIKATIONSNETZ
PROCEDE ET APPAREIL POUR TRANSFERER EFFICACEMENT DES DONNEES DANS UN RESEAU DE TELECOMMUNICATIONS

(43) Date of publication of application: 29.11.2006
(73) Proprietor: TELEFONAKTIEBOLAGET LM ERICSSON (publ), 164 83 Stockholm (SE)
(72) Inventor: DINSING, Torsten, 52074 Aachen (DE); QUINET, Raphael, B-4000 Liège (BE); GERDES, Martin, 52156 Monschau-Rohren (DE)
(74) Representative: Tonscheidt, Andreas
(86) International application number: PCT/EP2004/002728
(87) International publication number: WO 2005/091594

(56) References cited:
- EP-A- 1 267 542
- US-A1- 2003 079 041
- SIU-NAM CHUANG ET AL: "Dynamic service composition for wireless web access" IEEE PROCEEDINGS, 18 August 2002 (2002-08-18), pages 429-436, XP010609111
- R. FIELDING; UC IRVINE; J. GETTYS; J. MOGUL; DEC; H. FRYSTYK; T. BERNERS-LEE; MIT/LCS: "RFC 2068, Hypertext Transfer Protocol -- HTTP/1.1" INTERNET ARTICLE, January 1997 (1997-01), pages 1-163, XP015007852
- M. ROSE; INVISIBLE WORLDS, INC.: "RFC 3080, The Blocks Extensible Exchange Protocol Core" INTERNET ARTICLE, March 2001 (2001-03), pages 1-59, XP015008863
- M. ROSE; INVISIBLE WORLDS, INC.: "RFC 3081, Mapping the BEEP Core onto TCP" INTERNET ARTICLE, March 2001 (2001-03), pages 1-9, XP015008864

## Description

### Field of the invention

The present invention relates to data transmission within a telecommunications network, and more particularly to services and protocols used when transmitting data. The invention also relates to devices capable of performing that method.

### Background of the invention

The invention is related to a mobile terminal or other communication participants in a telecommunications network, such as telecommunication network nodes or the like, hereinafter termed as communication participants, on which various application protocol instances are connected to different peer protocol instances in a mobile or core network (telecommunications network) using TCP/IP connections or the like. According to the state of the art said TCP/IP connections are set up independently for the different application protocol instances, leading to performance losses, e.g. if only single requests are sent in one TCP/IP packet.

The document "RFC 3080, The Blocks Extensible Exchange Protocol Gre", pages 1-59, XP 015008863, by M. ROSE, INVISIBLE WORLDS INC., March 2001 describes a generic application protocol kernel for connection-oriented, asynchronous interactions called the BEEP (Blocks Extensible Exchange Protocol) core. BEEP permits simultaneous and independent exchanges within the context of a single application user-identity, supporting both textual and binary messages.

### Summary of the present invention

What is needed, therefore, and an object of the present invention, is a technique that enables communication participants in a telecommunications network to communicate more efficiently.

This is achieved by a method for transferring data from or to a telecommunications network node in a telecommunications network according to claim 1 and a corresponding telecommunications network node according to claim 5.

The essential advantages of the invention are that by jointly employing a single communication connection for said two or more application protocol instances the communication in itself is carried out more efficiently. The gain of efficiency results both from a faster communication and from less communication overhead.

According to the state of the art, an application executed on a mobile terminal which needs to communicate with other communication participants will have to use different communication connections either to address different remote communication participants and/or to address the same communication participants repeatedly. In order to establish such communication connections the application accesses application protocol instances provided on the mobile terminal to enable such data transfer. The respective application protocol instance in turn accesses a transport protocol instance, which in turn accesses the actual data transfer medium, e.g. the cable or the radio link.

As yet the number of communication connections required by the application corresponds to the communication demands of that application. I.e. an application which needs to contact three different participants requires three independent communication connections. The invention intends to reduce the number of independent communication connections.

Such independent communication connections are also termed here "required communication connections ", e.g. required by the application, since the applications needs this communication connection, i.e. a logical or active connection addressing a remote communications participant, e.g. an application in the telecommunications network, to fulfil the respective data transfer demands. The invention provides a method of operating independent logical communication connections, e.g. the communication connections required by the application, via a single communication connection, established in order to supersede the communication connections previously required. Operating independent logical communication connections by employing a single communication connection according to a transport protocol, is termed as "combining independent communication connections" hereinafter.

The single communication connection jointly employed by said application protocol (a substitute communication connection) as the result of combining independent communication connections needs not to be the only communication connection between two communication participants, e.g. the mobile terminal and a remote participant in the telecommunications network. The method may be carried out several times so that a first group a independent communication connections is combined to a first substitute communication connection, while a second or third group of independent communication connections may by combined to a second and third substitute communication connection and so on.

Jointly employing a single communication connection is achieved by
a) intercepting any communication attempt by one or more of said application protocol instances to the telecommunications network and
b) providing a communication connection to the telecommunications network for said one or more application protocol instances.

When one of the application protocol instances is accessed by e.g. an application executed by the mobile terminal, the application (more specifically the application by means of the respective application protocol instance) tries to establish a communication connection to the telecommunications network. Prior to the invention any such communication attempt would have resulted in an independent communication connection. According to the invention such attempts are intercepted and establishing of independent communication connections is inhibited, since independent communication connections are no longer needed. The independent communication connections are replaced by said single communication connection jointly employed by said application protocol instances (the substitute communication connection) provided instead.

Providing such a substitute communication connection comprises the steps of checking for an existing substitute communication connection and establishing a substitute communication connection if the check fails or using the existing substitute communication connection if the check is successful. This advantageously, prevents multiple substitute communication connection to be established, since only one substitute communication connection is required.

Using the substitute communication connection is achieved by processing multiple communication requests, especially multiple communication requests referring to independent communication connections as originally required, through said single communication connection. This is advantageous since employing the invention may be achieved in a manner unrecognisable by the respective communication participant, e.g. the mobile terminal or the application executed thereon. Communication requests issued by the application are handled by the respective application protocol instance addressed. The application is no longer concerned with the details of any further processing of the communication request. In fact, the application is not even aware of any need of independent communication connections or the resulting number of independent communication connections. From the application's point of view, when issuing a communication request, this request still refers to a (logical) communication connection required by the application. Hence, when employing the invention all the different communication connections required by the application are still there, logically; but with regard to data transfer, all such transfer is accomplished via said substitute communication connection.

Further advantageously, jointly employing a single communication connection comprises the step of keeping the substitute communication connection alive for future use. This prevents the substitute communication connection to be established repeatedly. The period of time during which the substitute communication connection is kept alive may for example be controlled by a lifespan of all the application protocol instances employing the substitute communication connection, i.e. when the last of said application protocol instance is removed from the memory of e.g. the mobile terminal, then the substitute communication connection will terminate as well.

According to a preferred embodiment of the invention a BEEP (Blocks Extensible Exchange Protocol) instance or BEEP layer is introduced between the transport protocol instance or layer (TCP layer) and the different application protocol instances or layers as a means of combining independent communication connections as well as of using the substitute communication connection. The BEEP protocol applied by said BEEP instance or said BEEP layer provides a setting up of persistent connections, i.e. connections that are maintained for a longer or predetermined time. Furthermore the BEEP protocol provides a pipelining of requests related to the application protocols, i.e. a sending of multiple requests in one TCP packet. Furthermore the BEEP protocol provides TCP connections that can be jointly used by different application protocol instances. The invention further introduces a BEEP protocol proxy in the telecommunications network, wherein the peer protocol instances for the BEEP protocol are implemented in the mobile terminal and in the proxy.

Further still, the invention introduces a local BEEP proxy provided on a first communication participant, e.g. a mobile terminal, and a remote BEEP proxy on a second communication participant, e.g. a network node in the telecommunications network, where in step b) of the method according to the invention the local BEEP proxy connects to the remote BEEP proxy and the substitute communication connection is a BEEP channel established between the local and the remote BEEP proxy. The remote BEEP proxy distributes all the communication requests processed through the BEEP channel by establishing individual communication connections to the addressees of those communication requests, e.g. applications addressed by the communication requests.

If the telecommunications network comprises means of accessing the internet then each said individual communication connection provided by the remote BEEP proxy is a communication connection either to an application within the telecommunications network or to an application in the internet relayed to the internet by said accessing means of the telecommunications network.

All the details discussed beforehand may also be applied in analogous manner to other communication participants, such as a telecommunications network node, or to a method for operating the communication participant node.

### Brief description of the drawings

For a better understanding of the present invention and in order to show how the same may be carried into effect, reference will now be made to the accompanying drawing illustrating a preferred embodiment of the invention. All the elements which are not required for the immediate understanding of the invention are omitted. In the drawing, the same elements are provided with the same reference numerals in the various figures, and in which:
- FIG 1: is an exemplary communication scenario with a mobile terminal engaged with a telecommunications network;
- FIG 2: is a schematic view of a web services interface of the mobile terminal;
- FIG 3: shows the communication scenario with the invention employed;
- FIG 4: is a schematic view of a modified web services interface provided in order to accomplish data transfer according to the invention and
- FIG 5: is a more complex communication scenario with the invention employed.

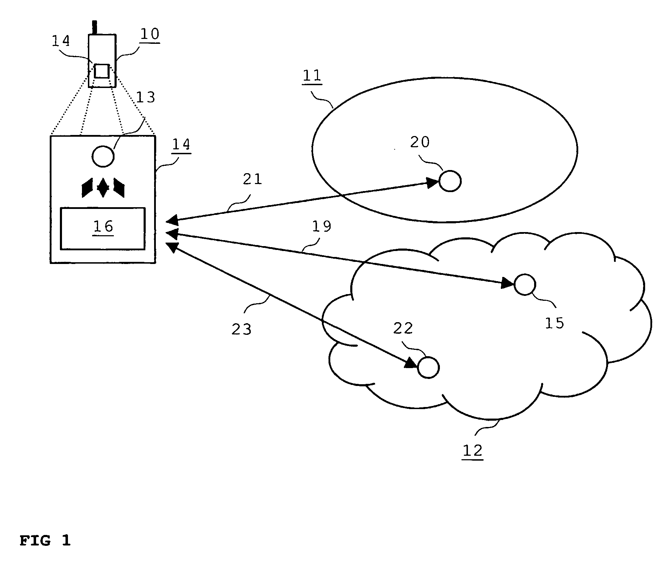

**FIG 1** shows a mobile terminal **10** in an exemplary communication scenario with a telecommunications network **11** and the internet **12** considered typical for future application usage on mobile terminals.

A simple mobile application scenario is given by the so-called "Friend Finder" application **13**. This application 13 is stored in a memory **14** of the mobile terminal 10. The application 13, executed on the mobile terminal 10, allows a user of the mobile terminal 10 to contact acquaintances (friends) who are within a given range. Friends who are out of range will not be contacted. Friends of a user are described as part of a user's profile. Said profile is either hosted within the telecommunications network 11 or on the internet 12.

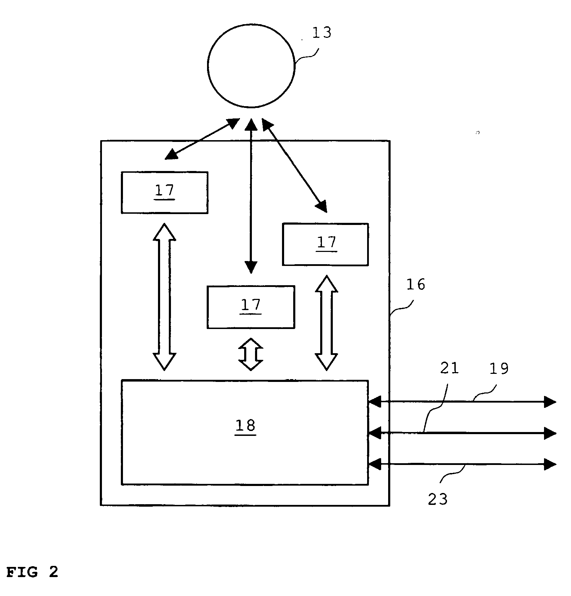

Access to the list of friends of a user is provided by a profile service **15** via a web services interface **16**. Said web services interface 16 is stored in the memory 14 as well and is shown more detailed in **FIG 2**. According to FIG 2 the web services interface 16 comprises two or more application protocol instances **17** addressed by the application 13 when issuing communication requests. In order to physically process any kind of data transfer, the web services interface 16 comprises at least one transport protocol instance **18**. For means of simplicity data transfer from or to the application is regarded as data transfer between the application 13 and the web services interface 16 as well as the web services interface 16 and any requested remote communication participant.

Thus, the web services interface 16, more specifically the transport protocol instance 18, establishes a first communication connection **19**, e.g. a TCP connection, to the profile service 15 in order to obtain said list of frien s. Another important parameter, needed on the mobile terminal 10, is the distance between the user and each of his friends. This information is provided by a location service **20**, typically hosted within the telecommunications network 11, through the web services interface 16. The web services interface 16 establishes a second communication connection **21**, e.g. another TCP connection, to the service 20 requested. The third required service is a messaging service **22**, which sends messages to selected friends, i.e. friends within a given range. This service 22 provides its functionality through the web services interface 16, too. Accordingly, a third communication connection **23**, e.g. a TCP connection, is established between the interface 16 and the service 22 requested.

The friend finder application 13 on the mobile terminal 10 performs the following actions: First it retrieves a list of friends from the profile service 15 using a SOAP request/response interaction over a TCP (= Transport Control Protocol) connection, illustrated as the first communication connection 19. Secondly it requests the current distance for each friend in that list between user and friend from the location service 20 using a SOAP interaction over the second communication connection 21. Thirdly, for each friend who is within a given distance to the user, it interacts with the messaging service 22 through the third communication connection 23. SOAP is used in this case, too.

In the first step, one communication connection, e.g. a TCP connection, is required. This is achieved by accessing a respective application protocol instance 17. In the second step, the application 13 needs to establish at least one further communication connection, e.g. a TCP connection, to the location service 20. However, this applies only if a HTTP (= HyperText Transfer Protocol) persistent connection is used. Without persistent connection, for each interaction, i.e. for each friend, a single communication connection, e.g. a TCP connection, has to be established. This, again, is achieved by accessing a respective application protocol instance 17, when required by repeatedly accessing the respective application protocol instance 17. In the third step the application 13 on the mobile terminal 10 has to establish at least one further communication connection, e.g. a TCP connection, to the messaging service 22. As in the second step, in the best case only one communication connection is needed. In the worst case a single communication connection for each friend within range has to be established. This is achieved by accessing or repeatedly accessing a respective application protocol instance 17, too.

The minimum number of accesses to application protocol instances 17, i.e. communication connections required by the application that have to be established on the mobile terminal 10, is therefore "3", i.e. one communication connection in each of the three steps. The maximum number of communication connections, however, is "1+n+m (0 <= m <= n)", where "n" is the number of friends and "m" is the number of friends in range.

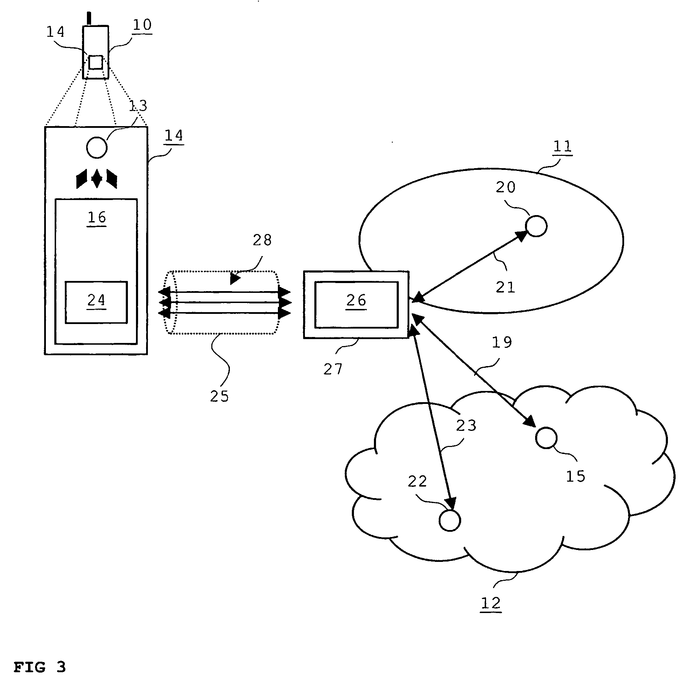

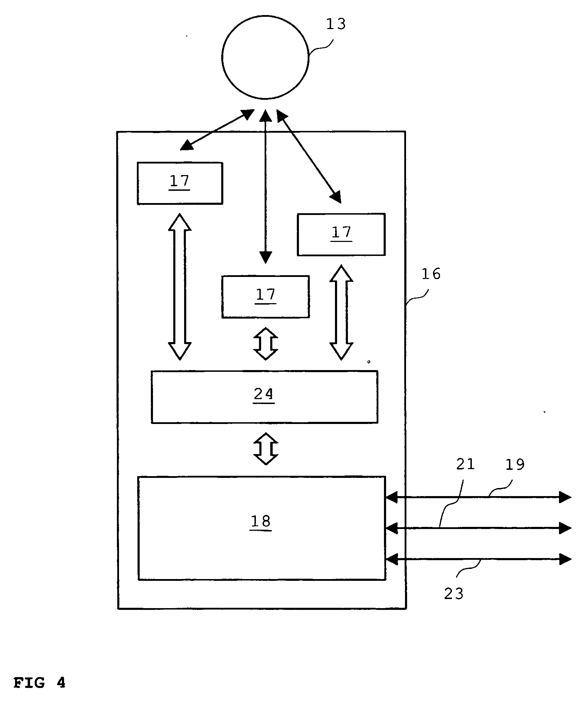

**FIG 3** shows the communication scenario according to FIG 1 when employing the invention in the mobile terminal 10. According to the invention, the mobile terminal 10 comprises means for combining multiple communication requests, i.e. multiple accesses to two or more application protocol instances 17. An embodiment of such a means is a BEEP (= Blocks Extensible Exchange Protocol) protocol layer or a BEEP proxy **24**. The BEEP proxy 24 on the mobile terminal 10 is denoted as local BEEP proxy 24 in the following and is a software application, stored in the memory 14 of the mobile terminal 10, logically arranged between the application protocol instance 17 accessed and the transport protocol instance 18, as shown in **FIG 4**.

The local BEEP proxy 24 is capable of intercepting any attempt of the friend finder application 13 or any other application to establish a communication connection, e.g. a TCP connection. On recognising the attempt to establish a communication connection, e.g. on recognising any access to an application protocol instance 17, the local BEEP proxy 24 provides a BEEP channel **25** (illustrated as a tube) with a corresponding remote BEEP proxy **26** in the telecommunications network 11, comprised in a telecommunications network node **27**, instead. Said BEEP channel 25 is a communication connection, e.g. a TCP connection, as well. Hence, said BEEP channel 25 is in fact the substitute communication connection.

Accordingly, the original SOAP/HTTP request of the friend finder application 13 is sent within the BEEP channel 25. This is illustrated by means of one of the arrows **28** inside the tube representing the BEEP channel 25. Providing a BEEP channel 25 either means establishing a BEEP channel 25 if no usable BEEP channel 25 exists or using the existing BEEP channel 25. The remote BEEP proxy 26 connects via the first communication connection 19 to the profile service 15 and forwards the request. The response takes the opposite way through the BEEP channel 25. After this interaction the connection between the two BEEP proxy peers 24, 26 is kept alive for future use.

In the second step the request (second arrow 28 inside the tube) from the friend finder application 13 on the mobile terminal 10 can directly be sent through the BEEP channel 25. No further communication connection has to be established on the mobile terminal 10. As BEEP channels 25 can be opened in parallel, all requests can be sent to the remote BEEP proxy 26 on the telecommunications network site 11 in parallel. The remote BEEP proxy peer 26 then connects to the location service 20, using parallel connections, persistent connections or pipelining. The third step, i.e. sending messages to selected friends, is analogous to the second step. All the requests (third arrow 28) will be sent directly through the BEEP channel 25.

The independent communication connections required by the application 13, e.g. the communication connections 19, 21, 23 from the mobile terminal to the requested services 15, 20, 22, are no longer required. Instead of three or more independent communication connections 19, 21, 23 only one single communication connection 25 is established on the mobile terminal 10. The data transferred to or from the application is transferred via the single communication connection 25.

Said telecommunications network node 27 in GSM-type terminology is a base transceiver station or a base station subsystem. However, as is apparent to any person skilled in the art, the present invention may be employed in other radio communication networks, e.g. UMTS, etc., as well. Therefore, the use of GSM-type terminology shall not be construed as limiting the scope of the invention.

In order to access the internet 12 the telecommunications network 11 comprises accessing means. Accessing the internet 12 by said accessing means may be achieved by said telecommunications network node 27 or other devices participating in the core network of the telecommunications network 11. Accordingly any connection to the telecommunications network 11 may be a communication connection either to an application within the telecommunications network 11 or to an application in the internet 12 relayed to the internet 12 and the respective application by said accessing means, e.g. said telecommunications network node 27, of the telecommunications network 11.

The advantage of the invention will become apparent when comparing the number of communication connections, e.g. TCP connection, required. When employing the friend finder application 13 according to the state of the art (cf. FIG 1 and accompanying description) at least three communication connections are required. According to the invention only one communication connection, the communication connection, e.g. the TCP connection, which is used by the BEEP channel 25, is required. This results in a significant decrease in communication overhead both with respect to the amount of data - a BEEP header is much smaller than a HTTP header, and the BEEP header is required only once while several HTTP headers are required - and to the time required.

The inventors have realised that for most messages sent over GPRS, the time required for the TCP handshakes plays a major role and is comparable to the time taken to transmit the data. The difference in time between using persistent or non-persistent TCP connections is about 1.500 ms. For comparison, the time measured for exchanging 10 strings of 100 characters using an already established TCP connection is about 2.500 ms. This means that opening and closing a TCP connection on a mobile terminal 10 takes about 1.5 sec per connection, while the actual data transmission takes 2.5 sec in the described scenario.

In the given example (cf. FIG 3), the BEEP proxy approach requires only one communication connection to be set up and maintained on the mobile terminal 10 and therefore potentially saves
- (n+m) x 1.5 sec compared to HTTP with non-persistent connections, or at least
- 2 x 1.5 sec = 3.0 sec compared to HTTP with persistent connections, due to saving two connection setups to the location service 20 and the messaging service 22.

The time saving potential is even higher if a higher number of interactions takes place to the same destination and if multiple applications on the mobile terminal 10 try to communicate at the same time, so that the open BEEP channel 25 may be used concurrently by different applications. The application which finds an open and usable BEEP channel 25 encounters no delay of communication which otherwise would result from setup and handshake. Still a further saving of time is expected when using parallel data transmission in independent BEEP channels.

Further, the time saving potential of the invention is owed to the fact that TCP/IP connections start with a set of parameters applicable for almost any communication connection. Thus the parameters are in no way optimal with regard to the efficiency of the communication connection. Thus, the participating protocol instances negotiate an optimal set of parameters for the respective communication connection. This resembles a learning phase and is called "slow-start". The slow-start is skipped for any further communication attempt when using the invention, because the connection, i.e. the connection between two transport protocol instances, is only established once and therefore the slow-start is only performed once, i.e. when establishing the jointly used communication connection.

Both the BEEP proxys 24, 26 are in no way limited to proxying HTTP or SOAP interactions. All kinds of communication oriented protocols can be mapped onto individual BEEP channels. All mappings take place in parallel. BEEP sessions, i.e. communication through a BEEP channel, can be secured with transport layer security. The BEEP proxy 24, 26 allows peer-to-peer interactions and client server models with the mobile terminal 10 in the server role.

Although a preferred embodiment of the invention has been illustrated and described herein, it is recognised that changes and variations may be made without departing from the invention as set forth in the claims.

Therefore, besides the rather simple scenario described above, more complex scenarios are also possible as a matter of course.

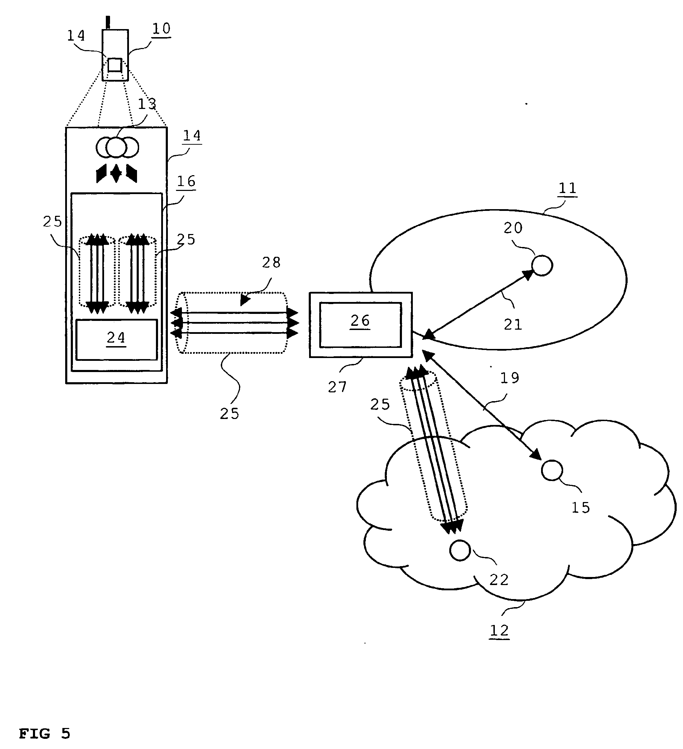

Accordingly **FIG 5** shows a communication scenario with multiple BEEP channels 25 involved. BEEP channels 25 may be established between the remote BEEP proxy 26 and remote services, such as the messaging service 22. BEEP channels 25 may as well be established on the mobile terminal 10 itself, for example between different applications (illustrated by further circles), specifically between application protocol instances addressed by different applications and the local BEEP proxy 24.

When recapitulating the main aspect of the invention a new and useful method for transferring data within a telecommunications network 11 is provided, as well as a mobile terminal 10 capable of engaging to the network and of carrying out the steps of the method, which advantageously may be applied where e.g. the data transfer from or to an application 13 running on the mobile terminal 10 originally required two or more independent communication connections to the telecommunications network 11, and where in order to enhance the efficiency of the communication the mobile terminal 10 combines independent communication connections originally required by the application 13 to a single communication connection 25.

### reference signs

- 10: mobile terminal
- 11: telecommunications network
- 12: internet
- 13: application (on mobile terminal)
- 14: memory
- 15: profile service
- 16: web services interface
- 17: application protocol instance
- 18: transport protocol instance
- 19: first communication connection
- 20: location service
- 21: second communication connection
- 22: messaging service
- 23: third communication connection
- 24: local BEEP proxy
- 25: BEEP channel
- 26: remote BEEP proxy
- 27: telecommunications network node
- 28: arrow

## Claims

1. Method for transferring data from or to a telecommunications network node (27) in a telecommunications network (11), such that said telecommunications network node (27) comprises a remote Blocks Extensible Exchange Protocol proxy (26) that distributes communication requests processed through a Blocks Extensible Exchange Protocol channel (25) established between said remote Blocks Extensible Exchange Protocol proxy (26) and a local Blocks Extensible Exchange Protocol proxy (24),
**characterized in that** said remote Blocks Extensible Exchange Protocol proxy (27) establishes individual communication connections (19, 21, 23) to applications addressed by the communication requests.

2. Method according to claim 1 wherein the communication requests comprise at least one of a profile service request, a location service request and a messaging service request.

3. Method according claim 2, wherein the profile service request, the location service request or the messaging service request are intercepted by the local Blocks Extensible Exchange Protocol proxy.

4. Method according to claim 3, wherein a friend finder application sends the profile service request, the location service request or the messaging service request via the local Blocks Extensible Exchange Protocol proxy.

5. Telecommunications network node (27) for a telecommunications network (11), said telecommunications network node comprising a remote Blocks Extensible Exchange Protocol proxy (27) provided for distributing communication requests processed through a Blocks Extensible Exchange Protocol channel (25) established between said remote Blocks Extensible Exchange Protocol proxy (26) and a local Blocks Extensible Exchange Protocol proxy (24),
**characterized in that** said remote Blocks Extensible Exchange Protocol proxy (27) is also provided for by establishing individual communication connections (19, 21, 23) to applications addressed by the communication requests.

6. Telecommunications network node (27) according to claim 5, wherein the communication requests comprise at least one of a profile service request, a location service request and a messaging service request.

## Patentansprüche

1. Verfahren zum Übertragen von Daten von einem Telekommunikationsnetzknoten (27) oder an einen Telekommunikationsnetzknoten (27) in einem Telekommunikationsnetz (11), so dass der Telekommunikationsnetzknoten (27) einen entfernten "Blocks Extensible Exchange Protocol"-Proxy (26) umfasst, der Kommunikationsanforderungen verteilt, die durch einen "Blocks Extensible Exchange Protocol"-Kanal (25) verarbeitet werden, der zwischen dem entfernten "Blocks Extensible Exchange Protocol"-Proxy (26) und einem lokalen "Blocks Extensible Exchange Protocol"-Proxy (24) eingerichtet ist, **dadurch gekennzeichnet, dass** der entfernte "Blocks Extensible Exchange Protocol"-Proxy (26) individuelle Kommunikationsverbindungen (19, 21, 23) zu Anwendungen einrichtet, die von den Kommunikationsanforderungen adressiert werden.

2. Verfahren nach Anspruch 1, wobei die Kommunikationsanforderungen eine Profildienstanforderung, eine Standortdienstanforderung und/oder eine Nachrichtenübermittlungsdienstanforderung umfassen.

3. Verfahren nach Anspruch 2, wobei die Profildienstanforderung, die Standortdienstanforderung oder die Nachrichtenübermittlungsdienstanforderung von dem lokalen "Blocks Extensible Exchange Protocol"-Proxy abgefangen werden.

4. Verfahren nach Anspruch 3, wobei eine Freundefinderanwendung die Profildienstanforderung, die Standortdienstanforderung oder die Nachrichtenübermittlungsdienstanforderung über den lokalen "Blocks Extensible Exchange Protocol"-Proxy sendet.

5. Telekommunikationsnetzknoten (27) für ein Telekommunikationsnetz (11), wobei der Telekommunikationsnetzknoten einen entfernten "Blocks Extensible Exchange Protocol"-Proxy (26) umfasst, der zum Verteilen von Kommunikationsanforderungen bereitgestellt ist, die durch einen "Blocks Extensible Exchange Protocol"-Kanal (25) verarbeitet werden, der zwischen dem entfernten "Blocks Extensible Exchange Protocol"-Proxy (26) und einem lokalen "Blocks Extensible Exchange Protocol"-Proxy (24) eingerichtet ist,
**dadurch gekennzeichnet, dass** der entfernte "Blocks Extensible Exchange Protocol"-Proxy (26) außerdem zum Einrichten von individuellen Kommunikationsverbindungen (19, 21, 23) zu Anwendungen, die von den Kommunikationsanforderungen adressiert werden, bereitgestellt ist.

6. Telekommunikationsnetzknoten (27) nach Anspruch 5, wobei die Kommunikationsanforderungen eine Profildienstanforderung, eine Standortdienstanforderung und/oder eine Nachrichtenübermittlungsdienstanforderung umfassen.

## Revendications

1. Procédé pour transférer des données à partir de ou vers un noeud de réseau de télécommunication (27) dans un réseau de télécommunication (11), tel que ledit noeud de réseau de télécommunication (27) comprend un mandataire de Protocole d'Echange Extensible à blocs distant (26) qui distribue les demandes de communication traitées par l'intermédiaire d'un canal de Protocole d'Echange Extensible à blocs (25) établi entre ledit mandataire de Protocole d'Echange Extensible à blocs distant (26) et un mandataire de Protocole d'Echange Extensible à blocs local (24), **caractérisé en ce que** ledit mandataire de Protocole d'Echange Extensible à blocs distant (27) établit des connexions de communication individuelles (19,21,23) vers des applications adressées par les demandes de communication.

2. Procédé selon la revendication 1, dans lequel les demandes de communication comprennent au moins une d'une demande de service de profil, une demande de service de localisation et une demande de service de messagerie.

3. Procédé selon la revendication 2, dans lequel la demande de service de profil, la demande de service de localisation ou la demande de service de messagerie sont interceptées par le mandataire de Protocole d'Echange Extensible à blocs local.

4. Procédé selon la revendication 3, dans lequel une application de recherche d'ami envoie la demande de service de profil, la demande de service de localisation ou la demande de service de messagerie via le mandataire de Protocole d'Echange Extensible à blocs local.

5. Noeud de réseau de télécommunication (27) destiné à un réseau de télécommunication (11), ledit noeud de réseau de télécommunication comprenant un mandataire de Protocole d'Echange Extensible à blocs distant (26) prévu pour distribuer des demandes de communication traitées par l'intermédiaire d'un canal de Protocole d'Echange Extensible à blocs (25) établi entre ledit mandataire de Protocole d'Echange Extensible à blocs distant (26) et un mandataire de Protocole d'Echange Extensible à blocs local (24), **caractérisé en ce que** ledit mandataire de Protocole d'Echange Extensible à blocs distant (26) est aussi prévu pour établir des connexions de communication individuelles (19,21,23) vers des applications adressées par les demandes de communication.

6. Noeud de réseau de télécommunication (27) selon la revendication 5, dans lequel les demandes de communication comprennent au moins une d'une demande de service de profil, une demande de service de localisation et une demande de service de messagerie.
